# EUROPÄISCHE PATENTSCHRIFT

(11) **EP 1 266 779 B1**
(45) Veröffentlichungstag und Bekanntmachung des Hinweises auf die Patenterteilung: **09.01.2008**
(21) Anmeldenummer: 02006436.6
(22) Anmeldetag: 22.03.2002
(51) Int. Cl.: B60H 1/00, B60H 1/02

(54) **Fahrzeug-Kühlkreislauf für die Kühlung einer temperaturerhöhenden Einrichtung mittels eines Kuhlmittels**
Vehicle cooling circuit for cooling a temperature increasing device by means of a coolant
Circuit de refroidissement de véhicule pour le refroidissement d'un dispositif d'augmentation de la température avec un réfrigérant

(30) Priorität: 15.06.2001 DE 10128877
(43) Veröffentlichungstag der Anmeldung: 18.12.2002
(73) Patentinhaber: Behr GmbH & Co. KG, 70469 Stuttgart (DE)
(72) Erfinder: Burk, Roland, 70469 Stuttgart (DE); Geskes, Peter, Dr., 70469 Stuttgart (DE); Rogg, Stefan, 70193 Stuttgart (DE)
(74) Vertreter: Grauel, Andreas

(56) Entgegenhaltungen:
- EP-A- 1 264 715
- WO-A-99/55544
- DE-C1- 4 433 836
- DE-C1- 19 850 829

## Beschreibung

Die Erfindung bezieht sich auf einen Fahrzeug-Kühlkreislauf für die Kühlung einer temperaturerhöhenden Einrichtung mittels eines Kühlmittels, mit einem oder mehreren, parallel und/oder in Reihe geschalteten Kühlern, einer Kühlmittelpumpe und einem zwischen der temperaturerhöhenden Einrichtung und dem Kühler angeordneten Wärmetauscher, der mit einem Wärmepumpenkreis gekoppelt ist, gemäß Oberbegriff des Anspruchs 1, und wie offenbart in WO 99/55544

Fahrzeug-Kühlkreisläufe der eingangs genannten Art sind bereits bekannt. Die DE 198 50 829 C1 offenbart einen Kühl-Heiz-Kreis für ein Fahrzeug. Dem Kühl-Heiz-Kreis ist zur Erhöhung der Leistungsdichte ein Wärmepumpenkreislauf zugeordnet. Nachteilhafterweise sind die mit einem derartigen bekannten Kühlsystem erzielbaren Kühlleistungen nicht zufriedenstellend. Dies ist beispielsweise insbesondere deshalb von Bedeutung, weil im Rahmen von Entwicklungen von neuen Generationen von Fahrzeugen (Brennstoffzellenfahrzeugen, Elektro- und Hybridfahrzeugen sowie hochmotorisierten Nutzfahrzeugen mit gekühlter Abgasrückführung) deutlich höhere Wärmelasten abgeführt werden müssen als bei herkömmlichen Verbrennungsfahrzeugen. Darüber hinaus muss insbesondere bei Brennstoffzellenfahrzeugen das Temperaturniveau des Kühlkreislaufs aufgrund der Temperaturbegrenzung der Brennstoffzelle so weit abgesenkt werden, so dass eine Kühlung mit heutigen Kühlkonzepten mangels Temperaturgefälle kaum mehr möglich ist. Die Abfuhr der Wärmelasten würde sehr große Wärmeübertrager und sehr große durchgesetzte Luftmengen erfordern.

Es ist Aufgabe der Erfindung, einen Fahrzeug-Kühlkreislauf der eingangs genannten Art vorzuschlagen, mittels welchem eine bei gegebenem Bauraum verbesserte Kühlleistung erzielt werden kann.

Zur Lösung der Aufgabe wird ein Fahrzeug-Kühlkreislauf mit den Merkmalen des Anspruchs 1 vorgeschlagen, der sich dadurch auszeichnet, dass -in Strömungsrichtung des Kühlmittels gesehen- der Wärmetauscher stromabwärts zum Kühler und stromaufwärts zur temperaturerhöhenden Einrichtung liegt. Ein derartig angeordneter Wärmetauscher erlaubt eine Wärmeabführung vom Kühlmittelkreis zum Wärmepumpenkreis auf der "kalten" Seite des Kühlmittelkreises. Es erfolgt somit im Kühler eine Vorkühlung des Kühlmittels und eine sich hieran anschließende Wärmeübertragung vom Kühlmittelkreis auf den Wärmepumpenkreis. Somit weist das Kühlmittel vor der Vorkühlung mittels des Kühlers eine verhältnismäßig hohe Betriebstemperatur auf, so dass eine effektive Vorkühlung desselben erfolgen kann. Mittels des stromabwärts zum Kühler und stromaufwärts zur temperaturerhöhenden Einrichtung angeordneten Wärmetauschers wird das Kühlmittel auf der "kalten" Seite des Kühlmittelkreises auf die gewünschte Betriebstemperatur (Kühlmitteleintrittstemperatur in Bezug auf die temperaturerhöhende Einrichtung) gekühlt. Im Vergleich zum Stand der Technik, gemäß welchem ein Wärmepumpenkreis mit einem Kühlmittelkreis auf dessen "warmen" Seite gekoppelt ist, ist mittels des erfindungsgemäßen Fahrzeug-Kühlkreislaufs eine Erhöhung der ansonsten erzielbaren Kühlleistungen erreichbar.

Der Wärmetauscher bildet einen Verdampfer des mit Kältemittel betriebenen Wärmepumpenkreises. Mittels eines derartig ausgebildeten Wärmetauschers wird eine besonders effektive Wärmeübertragung vom zu kühlenden Kühlmittel des Kühlmittelkreises auf ein Kältemittel des Wärmepumpenkreises ermöglicht. Dabei ist insbesondere die Verwendung von R600a (Isobutan) oder n-Butan als Kältemittel möglich und vorteilhaft. Derartige Kältemittel sind in einem Temperaturbereich von circa 60°C (Verdampferseite des Wärmepumpenkreises) bis circa 130°C (Hochdruckseite des Wärmepumpenkreises) in geeigneter Weise und ökologisch verträglich einsetzbar. Bevorzugt können auch Kältemittel für die Verwendung im Temperaturbereich zwischen 90°C und 150°C eingesetzt werden.

Der Wärmepumpenkreis weist mit Vorteil einen Kompressor, einen Kondensator und ein Expansionsventil auf. In einem derartigen Wärmepumpenkreis wird mittels des Kompressors das zuvor im Verdampfer erwärmte Kältemittel komprimiert und anschließend dem Kondensator zugeführt, der an seiner Austrittsseite mit dem Expansionsventil wirkverbunden ist. Das in dieser Weise gekühlte Kältemittel wird anschließend vom Expansionsventil zum Verdampfer geführt.

Entsprechend ist dem Kühler ein Kühlluftstrom zugeordnet. Dabei kann der Kühlluftstrom mittels eines oder mehrerer Lüfter (Drucklüfter und/oder Sauglüfter) erzeugt werden beziehungsweise, alternativ oder zusätzlich, ein sich am Fahrzeug einstellender Fahrtwind wenigstens teilweise zur Erzeugung des Kühlluftstroms genutzt werden. Da das Kühlmittel beim Betrieb der temperaturerhöhenden Einrichtung eine verhältnismäßig hohe Betriebstemperatur an der Eintrittsseite des Kühlers aufweist, ist mittels des Kühlluftstroms eine verhältnismäßig effektive Vorkühlung des Kühlmittels möglich.

Der Kühlluftstrom kühlt sowohl den Kühler (Kühlmittelkreis) als auch den Kondensator (Wärmepumpenkreis). Hierdurch wird insbesondere eine kompakte Ausgestaltung des Fahrzeug-Kühlkreislaufs unter Gewährleistung einer effektiven Kühlleistung ermöglicht.

Der Kühlluftstrom durchsetzt mit Vorteil erst den Kühler und dann den Kondensator. Da die Kühlmitteltemperatur im Kühler in der Regel niedriger ist als die Kältemitteltemperatur im Kondensator, ist es vorteilhaft, unter Ausnutzung eines einzigen Kühlluftstroms zunächst das Kühlmittel und anschließend das Kältemittel zu kühlen. Ferner besteht alternativ die Möglichkeit, eine parallele Kühlung des entsprechend angeordneten Kühlers und des Kondensators mittels eines zugeordneten Kühlluftteilstroms vorzusehen.

Entsprechend einer möglichen Ausführungsform ist im Wärmepumpenkreis ein vom Kaltemittel durchströmter Heizkörper zur Fahrzeuginnenraum-Erwärmung angeordnet. In dieser Weise kann die vom Kältemittel abzuführende Wärme zur Erwärmung des Fahrzeuginnenraums genutzt werden.

Vorteilhafterweise liegt der Heizkörper zwischen dem Kompressor und dem Kondensator. Somit ist der Heizkörper in der Hochdruckseite des Wärmepumpenkreises integriert, da er -in Strömungsrichtung des Kältemittels gesehen- stromabwärts zum Kompressor und stromaufwärts zum Kondensator angeordnet ist. Hierdurch wird eine besonders effektive Wärmeübertragung vom Kältemittel auf den Heizkörper gewährleistet, wobei zuerst im Heizkörper und dann im Kondensator vom Kühlmittel Wärme abgegeben wird. Alternativ können auch der Heizkörper und der Kondensator im Wärmepumpenkreis parallel geschaltet oder -in Strömungsrichtung des Kühlmittels gesehender Heizkörper stromabwärts zum Kondensator und stromaufwärts zum Expansionsventil (Hochdruckseite des Wärmepumpenkreises) angeordnet sein.

Gemäß einer weiteren, alternativen Ausführungsform ist der Heizkörper im Kühlmittelkreis angeordnet. In dieser Weise kann, alternativ oder zusätzlich in Bezug auf den Wärmepumpenkreis, abzugebende Kühlmittelwärme beispielsweise zur Fahrzeuginnenraum-Erwärmung genutzt werden.

Im Falle einer Integration des Heizkörpers im Kühlmittelkreis ist -in Strömungsrichtung des Kühlmittels betrachtet- dem Heizkörper vorzugsweise ein mit dem Wärmepumpenkreis gekoppelter, einen zweiten Kondensator darstellender Wärmeübertrager vorgeschaltet. Hierdurch wird das Kühlmittel vor Eintritt in den Heizkörper zusätzlich mittels Übertragung von Kältemittelwärme erwärmt, so dass eine anschließende, besonders effektive Übertragung von Kühlmittelwärme im Heizkörper erzielt werden kann. Gleichzeitig wird das Kältemittel mittels des zweiten Kondensators vor Eintritt in den (ersten) Kondensator, der mit einem Kühlluftstrom durchsetzt wird, vorgekühlt. Somit ergibt sich eine besonders effektive Kühlleistung des Gesamtsystems unter gleichzeitiger Ausnutzung von abgegebener Wärme beispielsweise zur Fahrzeuginnenraum-Erwärmung.

Entsprechend einer bevorzugten Ausführungsform liegt der Wärmeübertrager hinsichtlich des Wärmepumpenkreises zwischen dem Kompressor und dem Expansionsventil. Der Wärmeübertrager wirkt somit als Kondensator auf der Hochdruckseite des Wärmepumpenkreises.

Mit Vorteil ist der Wärmeübertrager mit dem Kühlmittelkreis gekoppelt und -in Bezug auf die Strömungsrichtung des Kühlmittels- dem Wärmeübertrager der Heizkörper nachgeschaltet, wobei das vom Heizkörper kommende Kühlmittel einen Nebenkühler des Kühlmittelkreises durchströmt. In dieser Weise ist es möglich, den Kühlmittelstrom stromabwärts zur temperaturerhöhenden Einrichtung und stromaufwärts zum Kühler in zwei Teilströme aufzuteilen, nämlich in einen ersten Kühlmittelstrom, der durch den Kühler geleitet wird und in einen zweiten Kühlmittelstrom, der durch den Wärmeübertrager, durch die nachgeschaltete Heizung und schließlich durch den Nebenkühler geführt wird. Dabei ist die Kühlmittelstromaufteilung beispielsweise mittels eines einstellbaren Drei-Wege-Ventils variierbar. Hierdurch wird eine betriebsangepasste Kühlung der temperaturerhöhenden Einrichtung und/oder Erwärmung des Fahrzeuginnenraums ermöglicht.

Vorteilhafterweise wird der Nebenkühler vom Kühlluftstrom gekühlt. Dabei kann der Kühlluftstrom erst den Kühler und dann den Nebenkühler durchsetzen. Alternativ hierzu ist auch eine Parallelanordnung des Nebenkühlers in Bezug auf den Kühler und eine entsprechende Luftkühlung möglich.

Weitere vorteilhafte Ausgestaltungen der Erfindung ergeben sich aus den Unteransprüchen und aus der Beschreibung.

Die Erfindung wird nachfolgend in mehreren Ausführungsbeispielen anhand zugehöriger Zeichnungen näher erläutert. Es zeigen:
- Figur 1: ein Funktionsschaltbild des erfindungsgemäßen Fahrzeug-Kühlkreislaufs gemäß einer ersten Ausführungsform;
- Figur 2: ein Funktionsschaltbild eines erfindungsgemäßen Fahrzeug-Kühlkreislaufs gemäß einer zweiten, alternativen Ausführungsform;
- Figur 3: ein Funktionsschaltbild eines erfindungsgemäßen Fahrzeug-Kühlkreislaufs gemäß einer dritten, alternativen Ausführungsform und
- Figur 4: ein Funktionsschaltbild eines nicht beanspruchten Fahrzeug-Kühlkreislaufs.

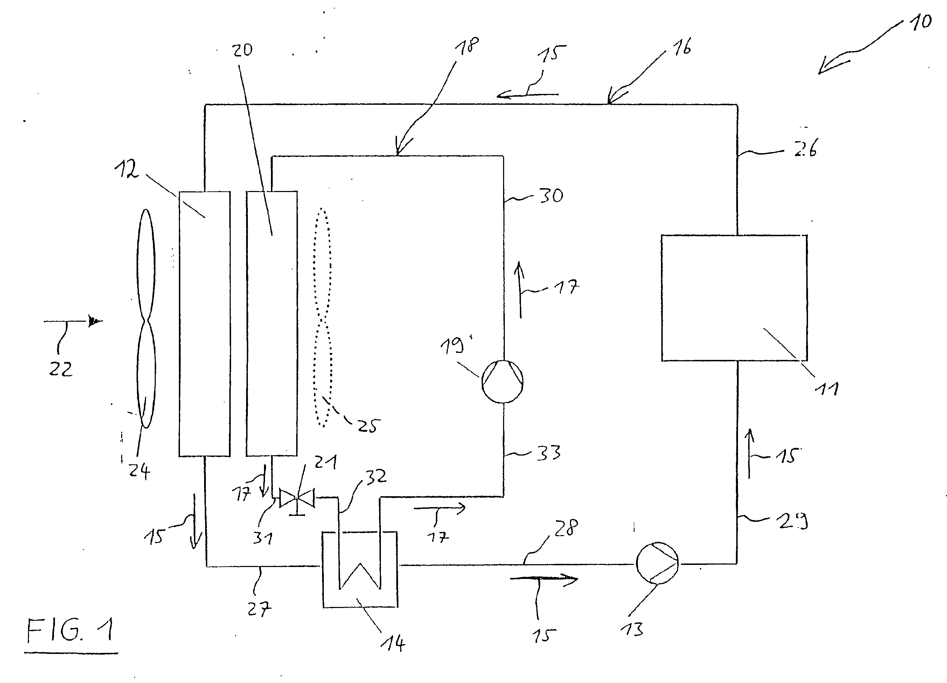

Figur 1 zeigt in schematischer Darstellung einen allgemein mit 10 bezeichneten Fahrzeug-Kühlkreislauf für die Kühlung einer temperaturerhöhenden Einrichtung 11 mittels eines Kühlmittels. Der Fahrzeug-Kühlkreislauf 10 weist einen Kühlmittelkreis 16 und einen Wärmepumpenkreis 18 auf. Das Kühlmittel wird gemäß Pfeilen 15 im Kühlmittelkreis 16 gefördert, während ein Kältemittel gemäß Pfeilen 17 durch den Wärmepumpenkreis 18 geführt wird.

Im Kühlmittelkreis 16 ist die temperaturerhöhende Einrichtung 11 integriert, welche mittels einer Kühlmittelleitung 26 mit dem Kühler 12 zur Kühlmittelförderung gemäß Pfeil 15 in Verbindung steht. Vom Kühler 12 führt eine Kühlmittelleitung 27 zum Wärmetauscher 14, welcher an seinem kühlmittelseitigen Austritt mittels einer Kühlmittelleitung 28 mit einer Kühlmittelpumpe 13 verbunden ist. Von der Kühlmittelpumpe 13 führt eine Kühlmittelleitung 29 zur Eintrittsseite der temperaturerhöhenden Einrichtung 11. Das Kühlmittel wird somit gemäß Pfeilen 15 von der temperaturerhöhenden Einrichtung 11 durch entsprechende Kühlmittelleitungen zum Kühler 12, anschließend zum Wärmetauscher 14, danach zur Kühlmittelpumpe 13 und schließlich wieder zurück zur temperaturerhöhenden Einrichtung 11 geführt.

Der Wärmepumpenkreis 18 weist den mit dem Kühlmittelkreis 16 gekoppelten Wärmetauscher 14 auf, der kältemittelaustrittsseitig mittels einer Kältemittelleitung 33 mit einem Kompressor 19 verbunden ist. Vom Kompressor 19 führt eine Kältemittelleitung 30 zu einem Kondensator 20, der an seiner Austrittsseite mittels einer Kältemittelleitung 31 mit einem Expansionsventil 21 verbunden ist. Eine Kältemittelleitung 32 führt vom Expansionsventil 21 zur Kältemitteleintrittsseite des Wärmetauschers 14. Das Kältemittel wird somit im Wärmepumpenkreis 18 gemäß den Pfeilen 17 vom Wärmetauscher 14 zum Kompressor 19 geführt, anschließend zum Kondensator 20 geleitet, von diesem zum Expansionsventil 21 geführt und schließlich in den Wärmetauscher 14 zurückgeleitet.

Der Wärmetauscher 14 enthält vier Anschlüsse, wobei jeweils ein Eintritts- und Austrittsanschluss für das Kühlmittel und für das Kältemittel vorgesehen sind. Dabei bildet der Wärmetauscher 14 einen Verdampfer des mit Kältemittel betriebenen Wärmepumpenkreises 18. Ferner ist im Fahrzeug-Kühlkreislauf 10 ein Lüfter 24 vorgesehen, der geeignet ist, einen Kühlluftstrom (Pfeil 22) zu erzeugen, welcher zur Kühlung sowohl des Kühlmittels im Kühler 12 als auch des Kältemittels im Kondensator 20 genutzt wird. Alternativ oder zusätzlich zum Lüfter 24 (Drucklüfter) kann auch ein als Sauglüfter ausgebildeter Lüfter 25 vorgesehen sein. Gegebenenfalls kann zur Kühlung des Kühlmittels im Kühler 12 und des Kältemittels im Kondensator 20 auch ein sich am Fahrzeug einstellender Fahrtwind wenigstens teilweise genutzt werden. Der Kühler 12 und der Kondensator 20 sind in Luftströmungsrichtung (Pfeil 22) gesehen derart hintereinander angeordnet, dass zunächst der Kühler 12 und anschließend der Kondensator 20 mit Kühlluft durchsetzt wird.

Die erste Ausführungsform gemäß Figur 1 ist vorteilhaft, da erwärmtes Kühlmittel zunächst mittels einer Luftkühlung im Kühler 12 vorgekühlt wird und anschließend mittels des als Verdampfer wirkenden Wärmetauschers 14 auf eine gewünschte Betriebstemperatur abgekühlt wird. Aufgrund dieser Kopplung des Wärmepumpenkreises 18 mit dem Kühlmittelkreis 16 auf der "kalten" Seite des Kühlmittelkreises 16 ist eine Leistungssteigerung der Gesamtkühlleistung im Vergleich zu traditionellen Systemen von circa 20 bis 50 % möglich. Dies ist unter anderem darauf zurückzuführen, dass die am Austritt des Kühlers 12 auf relativ niederem Temperaturniveau vorhandene Wärme durch die Wärmepumpe auf ein höheres Temperaturniveau gehoben wird, auf dem ein Wärmeübertrager 20 bei der erhöhten Temperaturdifferenz entsprechend mehr Wärme abführen kann. Die Endabkühlung des im Kühler 12 vorgekühlten Kühlmittels auf eine gewünschte untere Kühlmitteltemperatur durch den Wärmetauscher 1 ist damit auch dann noch möglich, wenn die obere Kühlmitteltemperatur am Eintritt des Kühlers 12 höher liegt als bei bisher bekannten Systemen. Durch diese Temperaturanhebung erhöht sich zusätzlich die Wärmeleistung des Kühlers 12. Somit ergibt sich die Gesamtkühlleistung des Fahrzeug-Kühlkreislaufs 10 in Bezug auf das Kühlmittel aus der Summation der Kühlleistung des Kühlers 12 und der Kühlleistung des Wärmetauschers 14. Die Kühlleistung des Kondensators 20 beträgt vorzugsweise circa 10 bis 60 % der Gesamtleistung des Fahrzeug-Kühlkreislaufs 10. Bei der temperaturerhöhenden Einrichtung 11 kann es sich beispielsweise um eine Brennstoffzelle oder um einen Verbrennungsmotor oder eine andere Funktionseinheit eines Fahrzeugs handeln. Die weitere Funktionsweise des Fahrzeug-Kühlkreislaufs 10 gemäß Figur 1 ist an sich bekannt und wird deshalb nicht detailliert beschrieben.

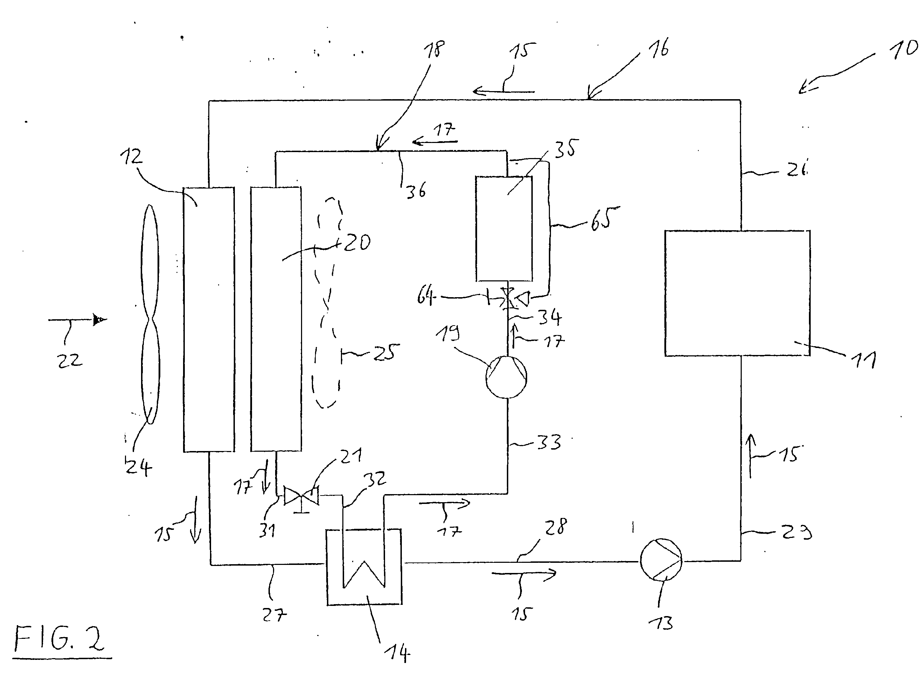

Figur 2 zeigt eine zweite, alternative Ausführungsform eines Fahrzeug-Kühlkreislaufs 10, wobei im Unterschied zu der Ausführungsform gemäß Figur 1 lediglich der Wärmepumpenkreis 18 derart verändert ist, dass vom Kompressor 19 eine Kältemittelleitung 34 unter Zwischenschaltung eines 3-Wege-Ventils 64 zu einem Heizkörper 35 führt, der mittels einer Kältemittelleitung 36 mit dem Kondensator 20 wirkverbunden ist. Eine Rückführleitung 65 verbindet die Kältemittelleitung 36 mit dem 3-Wege-Ventil 64. Der Heizkörper 35 ist somit auf der Hochdruckseite des Wärmepumpenkreises 18 stromabwärts zum Kompressor 19 und stromaufwärts zum Kondensator 20 angeordnet. Vorteilhafterweise kann der Heizkörper 35 beispielsweise zur Fahrzeuginnenraum-Erwärmung genutzt werden, da das den Heizkörper 35 durchsetzende und erwärmte Kältemittel Wärme an selbigen abgibt. Die Ausführungsform gemäß Figur 2 entspricht darüber hinaus hinsichtlich des Aufbaus und der Funktionsweise derjenigen der Figur 1, so dass auf eine eingehende Beschreibung der zweiten Ausführungsform verzichtet wird.

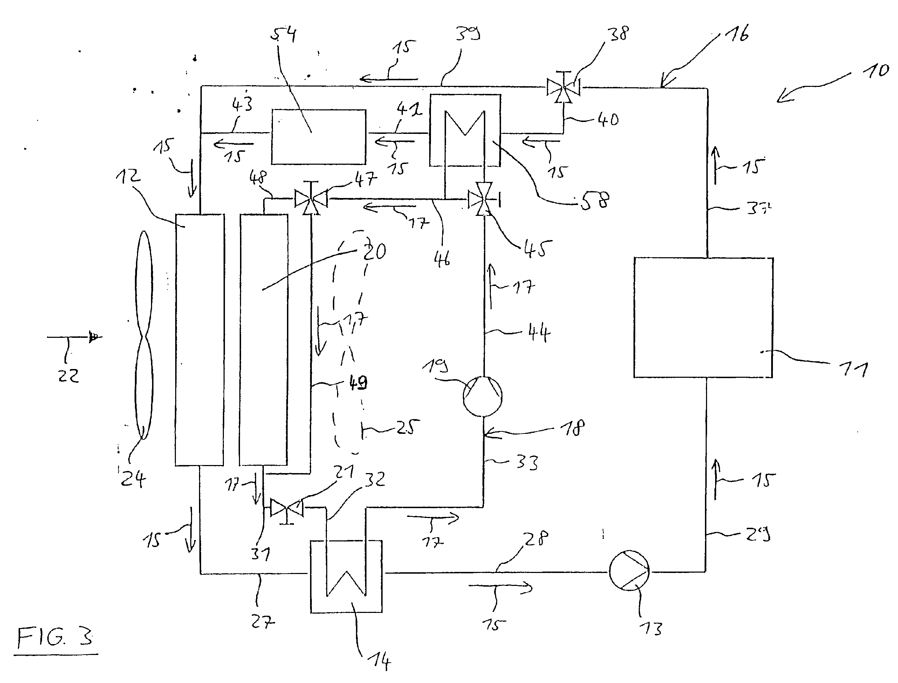

Figur 3 zeigt ein drittes, alternatives Ausführungsbeispiel eines Fahrzeug-Kühlkreislaufs 10. das sich in Bezug auf die Ausführungsform gemäß Figur 2 insbesondere dadurch unterscheidet, dass ein Heizkörper 54 im Kühlmittelkreis 16 integriert ist und nicht, wie in Figur 2, im Wärmepumpenkreis 18. Entsprechend Figur 3 führt eine Kühlmittelleitung 37 von der temperaturerhöhenden Einrichtung 11 zu einem Drei-Wege-Ventil 38, das an einem seiner Austritte mittels einer Kühlmittelleitung 39 mit dem Kühler 12 wirkverbunden ist und an seinem zweiten Austritt mittels einer Kühlmittelleitung 40 mit einem Wärmeübertrager 58 verbunden ist, welcher seinerseits mit dem Wärmepumpenkreis 18 gekoppelt ist. Vom Wärmeübertrager 58 führt eine Kühlmittelleitung 42 zum Heizkörper 54, der mittels einer Kühlmittelleitung 43 mit der Kühlmittelleitung 39 und somit mit dem Kühler 12 in Verbindung steht. Der Wärmepumpenkreis 18 ist derart ausgebildet, dass vom Kompressor 19 eine Kältemittelleitung 44 zu einem Drei-Wege-Ventil 45 führt, das an einer Austrittsseite mit dem Wärmeübertrager 58 und an seiner zweiten Austrittsseite mit einer Kältemittelleitung 46 verbunden ist, welche zu einem weiteren Drei-Wege-Ventil 47 führt. Der Wärmeübertrager 58 ist an seiner Kältemittelaustrittsseite mit der Kältemittelleitung 46 verbunden. Vom Drei-Wege-Ventil 47 führt eine Kältemittelleitung 48 zum Kondensator 20, der an seiner Austrittsseite mittels der Kältemittelleitung 31 mit dem Expansionsventil 21 in Verbindung steht. Von der zweiten Austrittsseite des Drei-Wege-Ventils 47 führt eine Kältemittelleitung 49 direkt zur Kältemittelleitung 31 unter Ausbildung eines Bypasses.

Bei dem Ausführungsbeispiel gemäß Figur 3 erfolgt somit mittels des Wärmeübertragers 58 eine Wärmeübertragung vom erwärmten Kältemittel auf das ebenfalls erwärmte Kühlmittel, wobei das Kühlmittel anschließend zum Heizkörper 54 geführt wird. Der Wärmeübertrager 58 dient dabei gleichzeitig als zweiter Kondensator in Bezug auf das Kältemittel, der dem Kondensator 20 vorgeschaltet ist. Der Heizkörper 54 kann auch hier beispielsweise zur Fahrzeuginnenraum-Erwärmung genutzt werden. Mittels des Drei-Wege-Ventils 38 ist es möglich, den Heizkörper 54 in den Fahrzeug-Kühlkreislauf 10 gegebenenfalls intensitätsvariabel zuzuschalten. Ferner erlaubt das Drei-Wege-Ventil 45 eine entsprechende Zuschaltung beziehungsweise Aktivierung des Wärmeübertragers 58. Das Drei-Wege-Ventil 47 erlaubt dabei eine gegebenenfalls intensitätsvariable Integrationsschaltung des Kondensators 20 in den Wärmepumpenkreis 18. Das Ausführungsbeispiel gemäß Figur 3 zeichnet sich somit durch eine besonders flexible Betriebseinstellbarkeit sowohl des Kühlmittelkreises 16 als auch des Wärmepumpenkreises 18 aus. Der weitere Aufbau und die entsprechende Funktionsweise des Ausführungsbeispiels gemäß Figur 3 ist an sich bekannt, so dass auf deren detaillierte Beschreibung verzichtet wird.

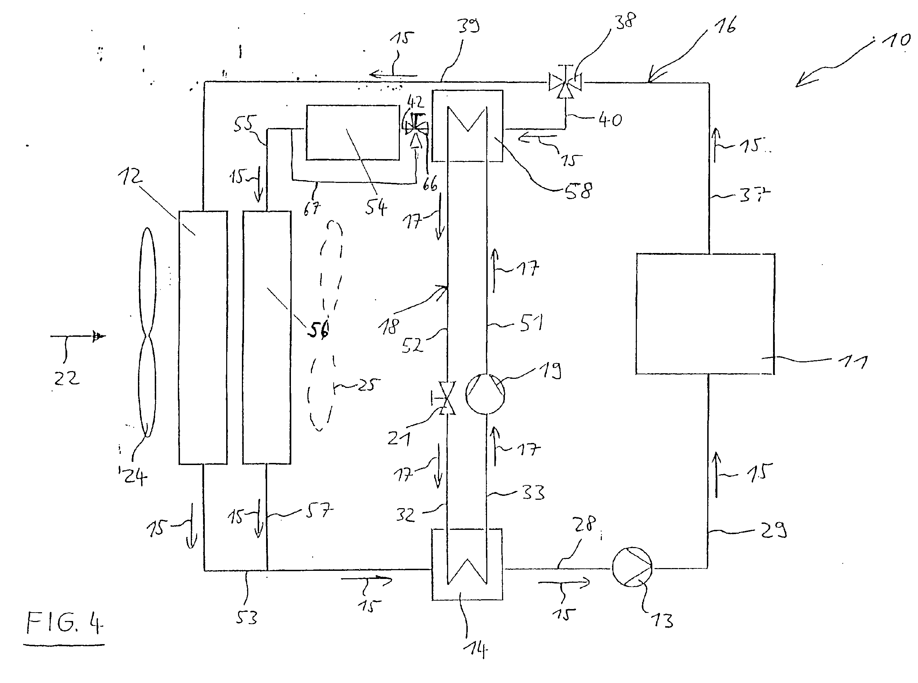

Figur 4 zeigt ein Ausführungsbeispiel eines Fahrzeug-Kühlkreislaufs 10, bei welchem ebenfalls ein Heizkörper 54 im Kühlmittelkreis 16 integriert ist. Dem Heizkörper 54 ist ein Wärmeübertrager 58 vorgeschaltet, welcher mit dem Wärmepumpenkreis 18 gekoppelt ist und in Bezug auf das Kältemittel als Kondensator dient. Im Unterschied zum Ausführungsbeispiel gemäß Figur 3 ist der Wärmepumpenkreis 18 derart ausgebildet, dass vom Kompressor 19 eine Kältemittelleitung 51 zum Wärmeübertrager 58 führt, welcher an seiner Kältemittelaustrittsseite mittels einer Kältemittelleitung 52 mit dem Expansionsventil 21 wirkverbunden ist. Vom Expansionsventil 21 führt die Kältemittelleitung 32 zum Wärmetauscher 14, der in Bezug auf das Kältemittel als Verdampfer wirkt. Der Wärmetauscher 14 ist an seiner Austrittsseite mittels der Kältemittelleitung 33 mit dem Kompressor 19 verbunden. Ferner ist eine Rückführleitung 67 vorgesehen, welche die Kühlmittelleitung 55 mit einem in der Kühlmittelleitung 42 zwischengeschalteten 3-Wege-Ventil 66 verbindet.

Der Wärmeübertrager 58 (Kondensator) ist bei beiden Ausführungsformen gemäß den Figuren 3 und 4 mit insgesamt vier Anschlüssen versehen, das heißt mit jeweils einem Eintritts- und Austrittsanschluss für das Kühlmittel und für das Kältemittel. Beim Ausführungsbeispiel gemäß Figur 4 weist der Wärmepumpenkreis 18 keinen luftgekühlten Kondensator auf, im Gegensatz zum Ausführungsbeispiel gemäß Figur 3, das einen zusätzlichen, luftgekühlten Kondensator 20 im Wärmepumpenkreis 18 vorsieht. Der Kühlmittelkreis 16 der Ausführungsform gemäß Figur 4 unterscheidet sich in Bezug auf das Ausführungsbeispiel der Figur 3 dadurch, dass vom Heizkörper 54 eine Kühlmittelleitung 55 zu einem Nebenkühler 56 des Kühlmittelkreises 16 führt. Der Nebenkühler 56 ist mittels einer Kühlmittelleitung 57 mit der Kühlmittelleitung 53 und somit mit dem Wärmetauscher 14 verbunden. Das durch den Nebenkühler 56 strömende Kühlmittel wird mittels des Kühlluftstroms (Pfeil 22) vorgekühlt. Dabei ist der Nebenkühler 56 in Bezug auf den Kühler 12 derart luftseitig in Reihe geschaltet, dass der Kühlluftstrom gemäß Pfeil 22 zunächst das Kühlmittel im Kühler 12 und anschließend das Kühlmittel im Nebenkühler 56 vorkühlt. Gegebenenfalls sind auch hier Parallelanordnungen des Kühlers 12 und des Nebenkühlers 56 sowie eine entsprechende Luftstromführung möglich.

Bei der Ausführungsform gemäß Figur 4 wird somit die gesamte abzugebende Kältemittelwärme mittels des Wärmeübertragers 58 (Kondensator) an das Kühlmittel abgegeben, welches dann zunächst den Heizkörper 54 und anschließend den Nebenkühler 56 (zweiter luftbeaufschlagter Kühlmittelkühler) durchströmt. Der weitere Aufbau und die entsprechende Funktionsweise des Fahrzeugs-Kühlkreislaufs 10 gemäß Figur 4 ist an sich bekannt, so dass keine weitere detaillierte Beschreibung desselben erfolgt.

Ein Fahrzeug-Kühlkreislauf entsprechend den oben beschriebenen Ausführungsbeispielen ist besonders vorteilhaft, da -wie bereits erwähnt- eine Steigerung der Gesamtkühlungsleistung ohne Beeinträchtigung des Kühlers 12 um circa 20 bis 50 % möglich ist. Dabei wird die Leistungsfähigkeit des Kühlers 12 sogar leicht gesteigert, da das Kühlmittel-Temperaturniveau um circa 1 bis 2 K angehoben wird. Durch die Verwendung von Isobutan oder n-Butan als Kältemittel ist ein Druckverhältnis von lediglich circa 2 möglich, so dass ein COP-Wert von 4 erreicht werden kann. Mittels des in Bezug auf die Luftströmung (Pfeil 22) hinter dem Kühler 12 angeordneten Kondensators 20, beziehungsweise mittels des Nebenkühlers 56, wird eine bessere Kühlleistung durch die verfügbare Kühlluft erzielt im Vergleich zu einem einzelnen, mit Kühlluft beaufschlagten Kühler 12. Ferner ist es möglich, einen integrierten beziehungsweise integrierbaren Heizkörper zur Temperierung des Fahrgastinnenraums zu nutzen.

## Patentansprüche

1. Fahrzeug-Kühlkreislauf für die Kühlung einer temperaturerhöhenden Einrichtung mittels eines Kühlmittels, mit einem oder mehreren, parallel und/oder in Reihe geschalteten Kühlern, einer Kühlmittelpumpe und einem zwischen der temperaturerhöhenden Einrichtung und dem Kühler angeordneten Wärmetauscher, der mit einem Wärmepumpenkreis gekoppelt ist, wobei in Strömungsrichtung (15) des Kühlmittels gesehen- der Wärmetauscher stromabwärts zum Kühler (12) und stromaufwärts zur temperaturerhöhenden Einrichtung (11) liegt, **dadurch gekennzeichnet, dass** der Wärmetauscher (14) einen Verdampfer des mit Kältemittel betriebenen Wärmepumpenkreises (18) bildet und der Wärmepumpenkreis (18) einen Kompressor (19), einen Kondensator (20) und ein Expansionsventil (21) aufweist, wobei dem Kühler (12) ein Kühlluftstrom (22) zugeordnet ist und der Kühlluftstrom (22) sowohl den Kühler (12) als auch den Kondensator (20) kühlt.

2. Kühlkreislauf nach einem der vorhergehenden Ansprüche, **dadurch gekennzeichnet, dass** der Kühlluftstrom (22) erst den Kühler (12) und dann den Kondensator (20) durchsetzt.

3. Kühlkreislauf nach einem der vorhergehenden Ansprüche, **dadurch gekennzeichnet, dass** im Wärmepumpenkreis (18) ein vom Kältemittel durchströmter Heizkörper (35;54) zur Fahrzeuginnenraum-Erwärmung angeordnet ist.

4. Kühlkreislauf nach Anspruch 3, **dadurch gekennzeichnet, dass** der Heizkörper (35) zwischen dem Kompressor (19) und dem Kondensator (20) liegt.

5. Kühlkreislauf nach Anspruch 3, **dadurch gekennzeichnet, dass** der Heizkörper (54) im Kühlmittelkreis (16) angeordnet ist.

6. Kühlkreislauf nach Anspruch 5, **dadurch gekennzeichnet, dass** - in Strömungsrichtung (15) des Kühlmittels betrachtetdem Heizkörper (54) ein mit dem Wärmepumpenkreis (18) gekoppelter, einen zweiten Kondensator darstellen der Wärmeübertrager (58) vorgeschaltet ist.

7. Kühlkreislauf nach Ansprunch 6, **dadurch gekennzeichnet, dass** der Wärmeübertrager (58) hinsichtlich des Wärmepumpenkreises (18) zwischen dem Kompressor (19) und dem Expansionsventil (21) liegt

8. Kühlkreislauf nach einem der Ansprüche 6 oder 7, **dadurch gekennzeichnet, dass** der Wärmeübertrager (58) mit dem Kühlmittelkreis (16) gekoppelt ist, dass - in Bezug auf die Strömungsrichtung (15) des Kühlmittelsdem Wärmeübertrager (58) der Heizkörper (54) nachgeschaltet ist und dass das vom Heizkörper (54) kommende Kühlmittel einen Nebenkühler (56) des Kühlmittelkreises (16) durchströmt.

9. Kühlkreislauf nach Anspruch 8, **dadurch gekennzeichnet, dass** der Nebenkühler (56) vom Kühlluftstrom (22) gekühlt wird.

10. Kühlkreislauf nach einem der Ansprüche 8 oder 9, **dadurch gekennzeichnet, dass** der Kühlluftstrom (22) erst den Kühler (12) und dann den Nebenkühler (56) durchsetzt.

## Claims

1. A vehicle cooling circuit for cooling a temperature increasing device by means of a coolant, having one or more radiators connected in parallel and/or in series, a coolant pump and a heat exchanger which is positioned between the temperature increasing device and the radiator and coupled to a heat pump circuit, the cooler being located downstream of the radiator (12) and upstream of the temperature increasing device (11) when seen in the direction of flow (15) of the coolant,
**characterised in that**
the heat exchanger forms an evaporator in the refrigerant-driven heat pump circuit (18) and said heat pump circuit (18) has a compressor (19), a condenser (20) and an expansion valve (21), a cool air flow (22) being assigned to the radiator (12) and said cool air flow (12) cooling both the radiator (12) and the condenser (20).

2. A cooling circuit in accordance with one of the preceding claims,
**characterised in that**
the cool air flow (22) passes through first the cooler (12) and then the condenser (20).

3. A cooling circuit in accordance with one of the preceding claims,
**characterised in that**
positioned in the heat pump circuit (18) is a heating element (35; 54) for heating the interior of the vehicle through which refrigerant passes.

4. A cooling circuit in accordance with claim 3,
**characterised in that**
the heating element (35) is located between the compressor (18) and the condenser (20).

5. A cooling circuit in accordance with claim 3,
**characterised in that**
the heating element (54) is positioned in the coolant circuit (16).

6. A cooling circuit in accordance with claim 5,
**characterised in that**
when viewed in the direction of flow (15) of the coolant, there is connected upstream of the heating element (54) a heat exchanger (58) which is coupled to the heat pump circuit (18) and forms a second condenser.

7. A cooling circuit in accordance with claim 6,
**characterised in that**
in relation to the heat pump circuit (18) the heat exchanger (58) is located between the compressor (19) and the expansion valve (21).

8. A cooling circuit in accordance with one of claims 6 or 7,
**characterised in that**
the heat exchanger (58) is coupled to the coolant circuit (16), in relation to the direction of flow (15) of the coolant the heating element (54) is connected downstream of the heat exchanger (58), and the coolant coming from the heating element (54) flows through an additional radiator (56) in the coolant circuit (16).

9. A cooling circuit in accordance with claim 8,
**characterised in that**
the additional radiator (56) is cooled by the cool air flow (22).

10. A cooling circuit in accordance with one of claims 8 or 9,
**characterised in that**
the cool air flow (22) passes through first the radiator (12) and then the additional radiator (56).

## Revendications

1. Circuit de refroidissement de véhicule pour le refroidissement d'un dispositif d'élévation de température au moyen d'un réfrigérant, comprenant un ou plusieurs refroidisseurs branchés en parallèle et/ou en série, une pompe à réfrigérant et un échangeur de chaleur disposé entre le dispositif d'élévation de température et le refroidisseur, lequel échangeur de chaleur est couplé avec un circuit de pompe à chaleur, et est situé, vu dans le sens d'écoulement (15) du réfrigérant, en aval du refroidisseur (12) et en amont du dispositif (11) d'élévation de température, **caractérisé en ce que** l'échangeur de chaleur (14) forme un évaporateur du circuit de pompe à chaleur (18) exploité avec du réfrigérant et le circuit de pompe à chaleur (18) comprend un compresseur (19), un condenseur (20) et une vanne d'expansion (21), un flux d'air de refroidissement (22) étant attribué au refroidisseur (12) et le flux d'air de refroidissement (22) refroidissant aussi bien le refroidisseur (12) que le condenseur (20).

2. Circuit de refroidissement selon l'une quelconque des revendications précédentes, **caractérisé en ce que** le flux d'air de refroidissement (22) traverse d'abord le refroidisseur (12) et ensuite le condenseur (20).

3. Circuit de refroidissement selon l'une quelconque des revendications précédentes, **caractérisé en ce qu'**un élément de chauffage (35 ; 54) traversé par le réfrigérant destiné au réchauffement de l'habitacle du véhicule est disposé dans le circuit de pompe à chaleur (18).

4. Circuit de refroidissement selon la revendication 3, **caractérisé en ce que** l'élément de chauffage (35) est disposé entre le compresseur (19) et le condenseur (20).

5. Circuit de refroidissement selon la revendication 3, **caractérisé en ce que** l'élément de chauffage (54) est disposé dans le circuit de réfrigérant (16).

6. Circuit de réfrigérant selon la revendication 5, **caractérisé en ce qu'**un échangeur de chaleur (58) couplé au circuit de pompe à chaleur (18) et présentant un deuxième condenseur est branché en amont de l'élément de chauffage (54), vu dans le sens d'écoulement (15) du réfrigérant.

7. Circuit de refroidissement selon la revendication 6, **caractérisé en ce que** l'échangeur de chaleur (58) est disposé par rapport au circuit de pompe à chaleur (18) entre le compresseur (19) et la vanne à expansion (21).

8. Circuit de refroidissement selon l'une des revendications 6 ou 7, **caractérisé en ce que** l'échangeur de chaleur (58) est couplé avec le circuit de réfrigérant (16), **en ce que** l'élément de chauffage (54) est branché en aval de l'échangeur de chaleur (58), par rapport au sens d'écoulement (15) du réfrigérant, et **en ce que** le réfrigérant arrivant de l'élément de chauffage (54) traverse un refroidisseur secondaire (56) du circuit de réfrigérant (16).

9. Circuit de refroidissement selon la revendication 8, **caractérisé en ce que** le refroidisseur secondaire (56) est refroidi par le flux d'air de refroidissement (22).

10. Circuit de refroidissement selon l'une des revendications 8 ou 9, **caractérisé en ce que** le flux d'air de refroidissement (22) traverse d'abord le refroidisseur (12) et ensuite le refroidisseur secondaire (56).
